# EUROPEAN PATENT SPECIFICATION

(11) **EP 1 624 237 B1**
(45) Date of publication and mention of the grant of the patent: **12.12.2007**
(21) Application number: 05105569.7
(22) Date of filing: 22.06.2005
(51) Int. Cl.: F16L 3/10, H02G 3/22

(54) **Device for fixing pipes and the like**
Vorrichtung zur Befestigung von Rohren oder dergleichen
Dispositif pour fixer de tuyaux ou similaires

(30) Priority: 04.08.2004 ES 200401900 U
(43) Date of publication of application: 08.02.2006
(73) Proprietor: Ceravalls Pujol, Ramon, 08211 Castellar del Valles (ES); Lopez Puche, Nuria, 08211 Castellar del Valles (ES)
(72) Inventor: Ceravalls Pujol, Ramon, 08211 Castellar del Valles (ES); Lopez Puche, Nuria, 08211 Castellar del Valles (ES)
(74) Representative: Ponti Sales, Adelaida

(56) References cited:
- EP-A- 0 760 445
- DE-C1- 19 752 525
- DE-U1- 8 515 383
- DE-U1- 9 414 312
- DE-U1- 29 518 999
- PATENT ABSTRACTS OF JAPAN vol. 1999, no. 11, 30 September 1999 (1999-09-30) & JP 11 173462 A (NICHIEI INTEKKU KK), 29 June 1999 (1999-06-29)

## Description

The present invention relates to a device for fixing pipes and the like.

### BACKGROUND OF THE INVENTION

Clamps used for holding pipes which are made of two halves, one half fixed to a wall or supporting means, and another half attached to the first one for retaining the pipe, are known. Each half comprises a curved portion and a pair of straight ends, in such a way that the clamp is closed attaching both halves by its two straight ends by means of screws.

When both halves of the clamp are attached, its two curved portions define a circumference for receiving the pipe. The curved portion of the half which is fixed to the wall is more complete than the curved portion of the other half, due to the need of easing holding the pipe before attaching both halves and closing the clamp. Thus, the curved portion of the half fixed to the wall surrounds a larger surface of the pipe and forms a housing that makes more difficult that the pipe would come off.

However, the previous fixation of the pipe is not effective if the clamp is inclined towards the ground or it is fixed to the ceiling.

To avoid said drawback, a clamp has been designed, described in the European Patent n° EP 0 945 659 B1, of the type described above, which comprises a plurality of abutments formed by pressing at the edges of the inner surface of the curved portions of the half of the clamp which is fixed to the wall. Said inner abutments allow holding the pipe to the half which is fixed to the wall before the clamp is closed with the other half.

This clamp has the drawback that said abutments are metallic as the clamp, and damage the pipe, since the pipe is scratched when it is pressed against them. On the other hand, when the tolerance of the outer diameter of the pipes is wide, there are troubles when introducing them in the clamp or holding them, since it is difficult to control the size of the abutments so that they adapt to the different diameters of the pipes.

Therefore, it is possible that the pipe is not properly held by the abutments when its diameter is smaller than nominal diameter, so that it is very difficult to introduce it inside the clamp when its diameter is larger.

Finally, the presence of said abutments makes it necessary that the clamp is bent to receive the pipe, which can produce fractures of the clamp if the material used to make it is not elastic enough.

DE-U-9414312 describes a clamp for pipes.

### DESCRIPTION OF THE INVENTION

The aim of the present invention is to solve the disadvantages of the devices known in the art, providing a device for fixing pipes and the like comprising a clamp which includes attaching means to a wall or the like and a housing for holding the pipe, and it is characterized in that it comprises al least one piece attached to the clamp which includes an end placed in the housing, said end forming a projection which is bent by the force exerted when inserting the pipe inside the housing, so that said end holds the pipe when the clamp is open.

Thanks to said piece, the device of the invention allows fixing the pipe to the clamp before it is closed in an easy and effective way. One of the ends of the piece is placed like a projection in the space of the half of the clamp in which the pipe is introduced, so that it holds it and prevents it from coming off before the other half is fixed and the clamp is closed.

It is not necessary to provide the clamp with the abutments, as the piece can subsequently be fixed to the clamp, and the manufacturing process of the clamp is much more economic.

Moreover, the piece of the device of the invention can be used for several types of clamps; either they are metallic, plastic or rubber coated.

According to an embodiment of the invention, the clamp comprises two halves, each of them including a curved portion and a pair of side legs which comprise attaching means between said halves, said curved portions forming the housing for the pipe when both halves are attached.

Preferably, the attaching means between said halves are orifices in the legs and screws.

Advantageously, the at least one piece comprises attaching means to one of the side legs of said halves.

Preferably, the attaching means of the at least one piece to one of the side legs of one of said halves comprise a slot for receiving the leg and an orifice for fixing the at least one piece to said leg by means of screws.

Thanks to these characteristics, the piece of the device of the invention is attached to the clamp in an easy and secure way, taking the minimum space.

According to another embodiment of the invention, one of the side legs of each half comprises means for hinging both halves.

Preferably, the at least one piece comprises attaching means to one of the side legs of said halves.

Advantageously, the means for attaching the at least one piece to one of the side legs of one of said halves comprise a slot for receiving the leg and an orifice for receiving the means for hinging both halves.

Thanks to said articulation, the clamp can be closed in a more easy way.

Also advantageously, the at least one piece is made of plastic.

The piece can be adapted to pipe diameters with considerable tolerances, since, by being made of plastic, it has the required flexibility to carry out an optimum fixation in each case.

### BRIEF DESCRIPTION OF THE DRAWINGS

In order to assist the description of all that has been outlined above some drawings are attached which show schematically and solely by way of non-restrictive example a practical case of embodiment of the device of the invention, in which
Figures 1 and 2 are plan and perspective views of the device of the invention;
Figure 3 is an elevation view of the device of the invention, with the clamp open and fixed to a wall;
Figure 4 is an elevation view of the device of the invention, with the clamp open and fixed to a wall and with a pipe;
Figure 5 is a view of a second embodiment of the device of the invention, which shows a clamp provided with a hinge.

### DESCRIPTION OF A PREFERRED EMBODIMENT

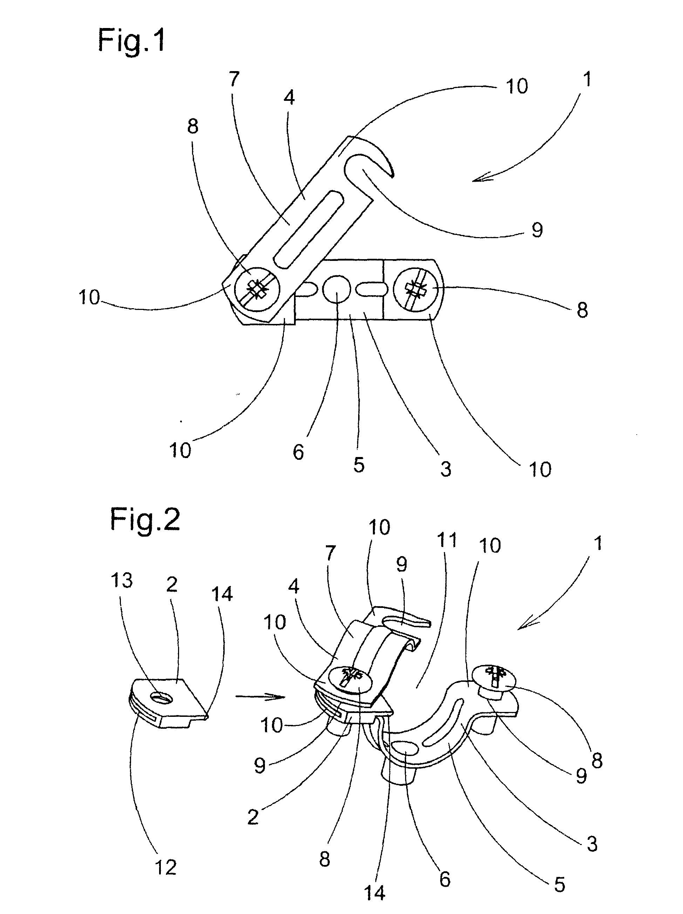

As shown in Figures 1 and 2, the device of the invention is made of a clamp 1 and a piece 2 which are attached.

The clamp 1 comprises two halves 3, 4. The half 3 is fixed to a wall or the like by means of the orifice 6 located at its lower end, and comprises a curved portion 5 like a semi-circumference. The half 4 also comprises a shorter curved portion 7, and is attached to the half 3 by means of screws 8 which are introduced in orifices 9 located at straight side flanges 10 of both halves 3, 4.

Thus, a housing 11 is formed inside which the pipe to be fixed will be placed.

As shown, the piece 2, which is a limited thickness plate, is fixed to the half 3 of the clamp 1 that is fixed to the wall by one of its side flanges 10, sliding it over the flange by means of a slot 12. Once the piece 2 is positioned, the screw 8 is placed through the orifice 13, which is aligned with the orifice 9 of the flange 10.

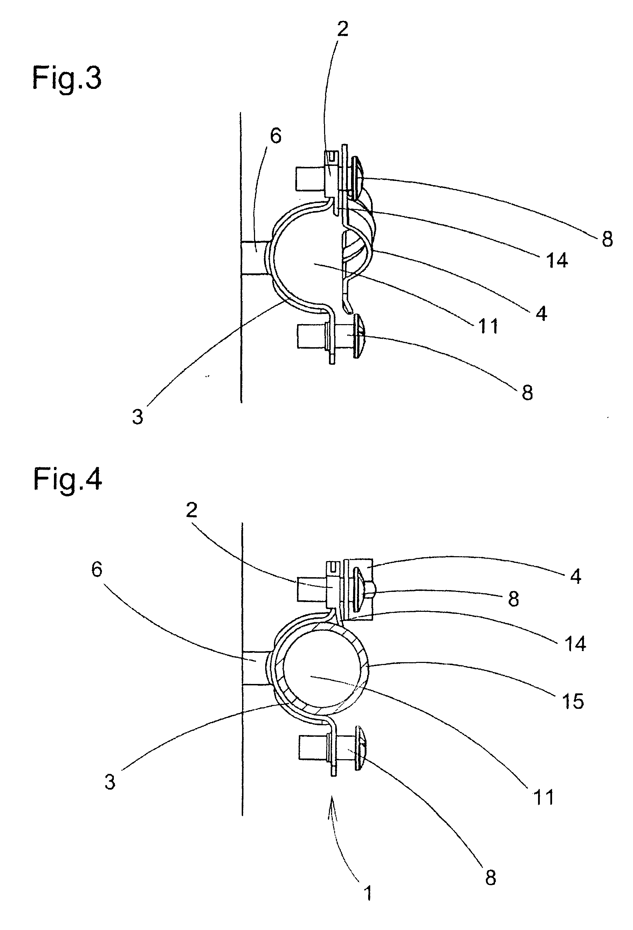

When the piece 2 has been fixed, it is arranged in such a way that one of its ends 14 is placed in the housing 11 of the clamp like a protrusion, as shown in figures 2 and 3.

Therefore, if someone wants to introduce a pipe 15 inside the housing 11 of the half 3 of the clamp 1 which is fixed to the wall, the end 14 of the piece will be bent by the force exerted by the user when inserting the pipe 15. Once the pipe 15 has been inserted in the housing 11 (Figure 4) the end 14 of the piece 2 works as a retainer and prevents the pipe 15 from coming off or falling down when the clamp is open.

This allows the user definitely attaching the two halves 3, 4 of the clamp 1 without having to hold the pipe 15 in order to prevent it from falling down from the fixed half 3 when carrying out the operation.

Although in the shown embodiment only one piece 2 attached to one of the flanges 10 of the half 3 of the clamp 1 fixed to a wall has been used, two pieces 2 attached to each flange 10 of said half 3 may also be used to better secure the pipe 15, or said piece 2 may be attached 2 to any other flange 10 as well.

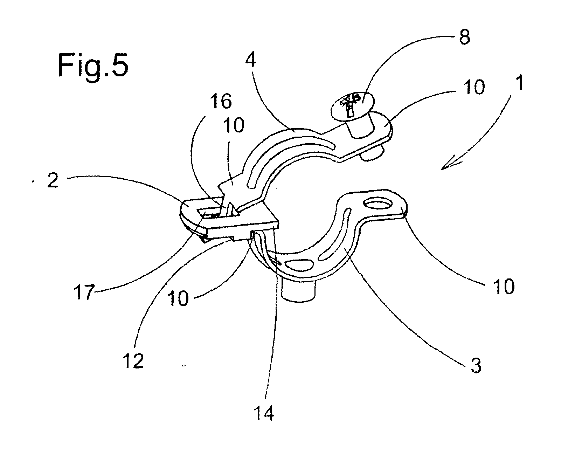

Figure 5 shows a second embodiment of the device of the invention. In this case, the clamp 1 is provided with a hinge 16 at one of the side legs 10 of each half, which allow opening and closing the clamp in a faster and easier way.

The piece 2 is attached to one of said legs 10 in a similar way to the above-described embodiment, but it has an orifice 17 for housing the hinge 16. Although in the present embodiment the piece 2 is attached to one of the legs 10 in which the hinge 16 is located, obviously it may also be attached to any other leg 10 of the clamp 1.

The piece 2 may preferably be made of a sufficiently flexible material, as for example, plastic, which allows it to be adapted to different pipe 15 diameters.

## Claims

1. Device for fixing pipes (15) and the like comprising a clamp (1) which includes attaching means (6) to a wall or the like and a housing (11) for holding the pipe (15), **characterized in that** it comprises al least one piece (2) attached to the clamp (1) which includes an end (14) placed in the housing (11), said end (14) forming a projection which is bent by the force exerted when inserting the pipe (15) inside the housing (11), so that said end (14) holds the pipe (15) when the clamp (1) is open.

2. Device, according to claim 1, **characterized in that** the clamp (1) comprises two halves (3, 4), each of them including a curved portion (5, 7) and a pair of side legs (10) which comprise attaching means between said halves (3, 4), said curved portions (5,7) forming the housing (11) for the pipe (15) when both halves (3, 4) are attached.

3. Device, according to claim 2, **characterized in that** the attaching means between said halves (3, 4) are orifices (9) in the legs (10) and screws (8).

4. Device, according to claim 3, **characterized in that** the at least one piece (2) comprises attaching means to one of the side legs (10) of said halves (3).

5. Device, according to claim 4, **characterized in that** the attaching means of the at least one piece (2) to one of the side legs (10) of one of said halves (3) comprise a slot (12) for receiving the leg (10) and an orifice (13) for fixing the at least one piece (2) to said leg (10) by means of screws (8) .

6. Device, according to claims 2 or 3, **characterized in that** one of the side legs (10) of each half (3, 4) comprises means (16) for hinging both halves (3, 4).

7. Device, according to claim 6, **characterized in that** the at least one piece (2) comprises attaching means to one of the side legs (10) of said halves (3, 4).

8. Device, according to claim 7, **characterized in that** the means for attaching the at least one piece (2) to one of the side legs (10) of one of said halves (3, 4) comprise a slot (12) for receiving the leg (10) and an orifice (17) for receiving the means (16) for hinging both halves (3, 4).

9. Device, according to claims 1 to 8, **characterized in that** the at least one piece (2) is made of plastic.

## Patentansprüche

1. Vorrichtung zum Befestigen von Rohren (15) oder dergleichem mit einer Klemme (1), welche eine Einrichtung (6) zum Anbringen an einer Wand oder dergleichem enthält, und einem Gehäuse (11) zum Halten des Rohrs (15), **dadurch gekennzeichnet, dass** die Vorrichtung mindestens ein an der Klemme (1) angebrachtes Stück (2) aufweist, welches ein in dem Gehäuse (11) angeordnetes Ende (14) aufweist, wobei das Ende (14) einen Vorsprung bildet, welcher durch die beim Einführen des Rohres (15) in das Gehäuse (11) ausgeübte Kraft gebogen wird, damit das Ende (14) das Rohr (15) hält, wenn die Klemme (1) offen ist.

2. Vorrichtung nach Anspruch 1, **dadurch gekennzeichnet, dass** die Klemme (1) zwei Hälften (3, 4) aufweist, welche jeweils einen gebogenen Abschnitt (5, 7) und ein Paar an seitlichen Schenkeln (10) aufweisen, welches zwischen den Hälften (3, 4) eine Befestigungseinrichtung aufweist, wobei die gebogenen Abschnitte (5, 7) das Gehäuse (11) für das Rohr (15) bilden, wenn beide Hälften (3, 4) angebracht sind.

3. Vorrichtung nach Anspruch 2, **dadurch gekennzeichnet, dass** die Befestigungseinrichtung zwischen den Hälften (3, 4) Öffnungen (9) in den Schenkeln (10) und Schrauben (8) sind.

4. Vorrichtung nach Anspruch 3, **dadurch gekennzeichnet, dass** das mindestens eine Stück (2) eine Einrichtung zum Anbringen an einem der seitlichen Schenkel (10) der Hälften (3) aufweist.

5. Vorrichtung nach Anspruch 4, **dadurch gekennzeichnet, dass** die Einrichtung zum Anbringen des mindestens einen Stücks (2) an einem der seitlichen Schenkel (10) einer der Hälften (3) einen Schlitz (12) zum Aufnehmen des Schenkels (10) und eine Öffnung (13) zu Befestigen des mindestens einen Stücks (2) am Schenkel (10) mittels Schrauben (8) aufweist.

6. Vorrichtung nach Anspruch 2 oder 3, **dadurch gekennzeichnet, dass** einer der seitlichen Schenkel (10) jeder Hälfte (3, 4) eine Einrichtung (16) zum Einhängen beider Hälften (3, 4) aufweist.

7. Vorrichtung nach Anspruch 6, **dadurch gekennzeichnet, dass** das mindestens eine Stück (2) eine Einrichtung zum Anbringen an einem der seitlichen Schenkel (10) der Hälften (3, 4) aufweist.

8. Vorrichtung nach Anspruch 7, **dadurch gekennzeichnet, dass** die Einrichtung zum Anbringen des mindestens einen Stücks (2) an einem der seitlichen Schenkel (10) einer der Hälften (3, 4) einen Schlitz (12) zum Aufnehmen des Schenkels (10) und eine Öffnung (17) zum Aufnehmen der Einrichtung (16) zum Einhängen beider Hälften (3, 4) aufweist.

9. Vorrichtung nach den Ansprüchen 1 bis 8, **dadurch gekennzeichnet, dass** das mindestens eine Stück (2) aus Kunststoff besteht.

## Revendications

1. Dispositif pour fixer des tuyaux (15) et analogues, comportant un dispositif de serrage (1) qui comporte des moyens de fixation (6) sur une paroi ou analogue, et un logement (11) pour supporter le tuyau (15), **caractérisé en ce qu'**il comporte au moins une pièce (2) fixée sur le dispositif de serrage (1) qui comporte une extrémité (14) placée dans le logement (11), ladite extrémité (14) formant une saillie qui est incurvée par la force exercée lors de l'insertion du tuyau (15) à l'intérieur du logement (11), de sorte que ladite extrémité (14) supporte le tuyau (15) lorsque le dispositif de serrage (1) est ouvert.

2. Dispositif selon la revendication 1, **caractérisé en ce que** le dispositif de serrage (1) comporte deux moitiés (3, 4), chacune d'entre elles comportant une partie incurvée (5, 7) et une paire de pattes latérales (10) qui comportent des moyens de fixation entre lesdites moitiés (3, 4), lesdites parties incurvées (5, 7) formant le logement (11) pour le tuyau (15) lorsque les deux moitiés (3, 4) sont fixées.

3. Dispositif selon la revendication 2, **caractérisé en ce que** les moyens de fixation entre lesdites moitiés (3, 4) sont constitués d'orifices (9) dans les pattes (10) et de vis (8).

4. Dispositif selon la revendication 3, **caractérisé en ce que** la au moins une pièce (2) comporte des moyens de fixation sur une des pattes latérales (10) desdites moitiés (3).

5. Dispositif selon la revendication 4, **caractérisé en ce que** les moyens de fixation de la au moins une pièce (2) sur une des pattes latérales (10) d'une desdites moitiés (3) comportent une fente (12) destinée à recevoir la patte (10), et un orifice (13) pour fixer la au moins une pièce (2) sur ladite patte (10) par l'intermédiaire de vis (8).

6. Dispositif selon la revendication 2 ou 3, **caractérisé en ce qu'**une des pattes latérales (10) de chaque moitié (3, 4) comporte des moyens (16) pour articuler les deux moitiés (3, 4).

7. Dispositif selon la revendication 6, **caractérisé en ce que** la au moins une pièce (2) comporte des moyens de fixation sur une des pattes latérales (10) desdites moitiés (3, 4).

8. Dispositif selon la revendication 7, **caractérisé en ce que** les moyens pour fixer la au moins une pièce (2) sur une des pattes latérales (10) d'une desdites moitiés (3, 4) comportent une fente (12) destinée à recevoir la patte (10), et un orifice (17) pour recevoir les moyens (16) pour articuler les deux moitiés (3, 4).

9. Dispositif selon l'une quelconque des revendications 1 à 8, **caractérisé en ce que** la au moins une pièce (2) est réalisée en matière plastique.
